# EUROPEAN PATENT APPLICATION

(11) **EP 2 390 924 A1**
(43) Date of publication of application: **30.11.2011**
(21) Application number: 10425181.4
(22) Date of filing: 26.05.2010
(51) Int. Cl.: H01L 31/048, F24J 2/52

(54) **Building roof with rows of curved tiles alternating with strip-shaped solar modules, and sheet-metal panel for making said roof**

(71) Applicant: Thesan S.p.A., 10129 Torino (IT)
(72) Inventor: Balbo di Vanadio, Aimone, 20123 Milano (IT)
(74) Representative: Marchitelli, Mauro

(57) **Abstract**

A building roof having at least one inclined pitch (12) bearing a plurality of linear rows (18) of mutually parallel curved tiles (20), a plurality of strip-shaped solar modules (22) arranged between said rows (18) of curved tiles (20), and a plurality of fretted sheet-metal panels (14), each of which has a plurality of longitudinal ribbings (30) configured for engagement of said solar modules (22), wherein each of said solar modules (22) is fixed by means of fasteners (44', 44", 44"') between a pair of adjacent ribbings (30) and wherein said rows (18) of curved tiles (20) are arranged along the line of maximum slope of the roof pitch (12) between pairs of ribbings (30) to which said solar modules (22) are fixed.

## Description

### Background of the invention

The present invention relates to a building roof with rows of curved tiles alternating with strip-shaped solar modules.

The present invention has been developed in particular in order to enable installation of solar modules, either photovoltaic or thermal ones, on roofs of historic buildings with curved tiles.

### Description of the known art

The installation of solar modules on roofs of buildings located in historic centres poses problems from the standpoint of landscape. The installation of photovoltaic or thermal panels on roofs with curved tiles is not generally possible in the majority of historic centres on account of landscape constraints.

The European patent application No. 09425048.7 (which has not yet been published at the date of filing of the present patent application) describes a building roof formed by a plurality of linear rows of curved tiles alternating with strip-shaped solar modules. The solution described in this document enables reduction of the impact of the solar modules in terms of landscape and conservation of the characteristic appearance of the curved-tile roofs of historic buildings.

The solution described in this patent application envisages provision of a base structure of the roof formed by a plurality of elongated tray-shaped roof elements arranged adjacent to one another and on which the strip-shaped solar modules are fixed. The adjacent edges of said roof elements are covered by respective rows of curved tiles.

One of the difficulties in the construction of roofs of this type is that there does not exist just one type of curved tile of standardized dimensions. The size of the curved tiles varies according to the area, the kiln where they were produced, and the type of clay available. It has been noted that the width of existing curved tiles can range from 140 to 210 mm. With this variability of the size of the curved tiles there are difficulties in standardizing the system of construction of a roof.

### Object and summary of the invention

The object of the present invention is to provide a building roof made up of a small number of modular elements that can be installed in a simple and fast way and are readily adaptable to curved tiles of different sizes.

According to the present invention, said object is achieved by a building roof having the characteristics that form the subject of Claim 1.

The present invention also regards a fretted sheet-metal panel used for the construction of a roof with solar modules alternating with rows of curved tiles, having the characteristics that form the subject of Claim 7.

### Brief description of the drawings

The present invention will now be described in detail with reference to the attached drawings, which are provided purely by way of non-limiting example, and in which:
- Figure 1 is a partial perspective view of a building roof according to the present invention;
- Figure 2 is a cross section of a fretted sheet-metal panel used for the construction of a roof according to the present invention;
- Figures 3, 4 and 5 are details at a larger scale of the parts indicated by the arrows III, IV, and V in Figure 2;
- Figure 6 is a cross section according to the line VI-VI of Figure 1;
- Figure 7 is a view at a larger scale of the detail indicated by the arrow VII in Figure 6;
- Figures 8, 9 and 10 illustrate the installation of the solar modules on three different fretted sheet-metal panels;
- Figures 11, 12 and 13 are details at a larger scale according to the arrows XI, XII, and XIII of Figures 8, 9, and 10, respectively; and
- Figures 14, 15 and 16 are perspective views of three different types of fasteners for fixing solar modules, indicated by the arrows XIV, XV, and XVI in Figures 11, 12, and 13, respectively.

### Description of preferred embodiments of the invention

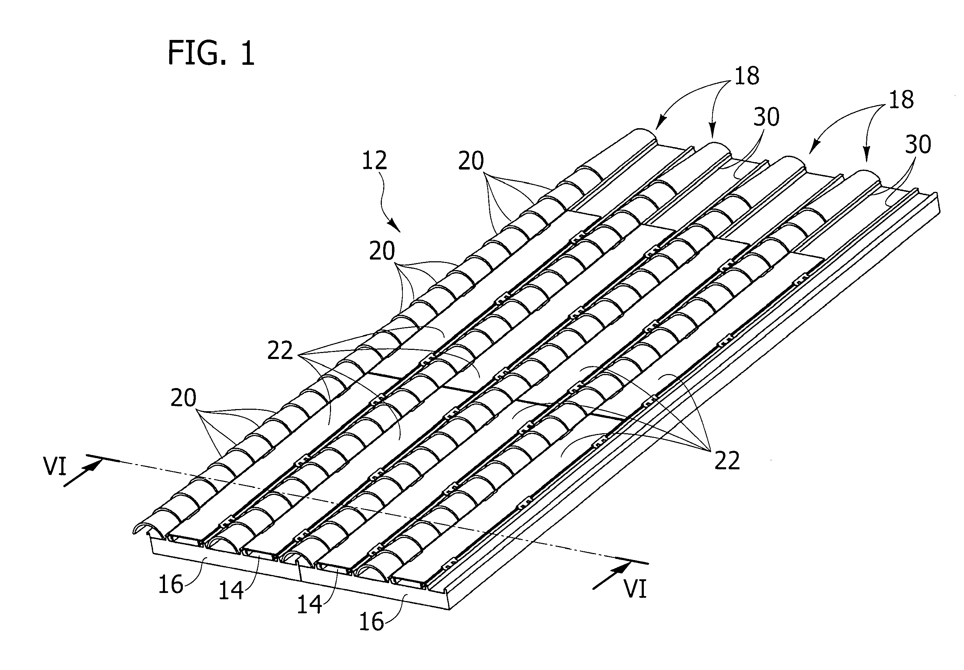

Illustrated in Figure 1 is a part of a building roof according to the present invention. The roof comprises at least one pitch 12 inclined with respect to a vertical plane. The pitch 12 comprises a plurality of fretted sheet-metal panels 14 fixed to a supporting structure of the roof. Preferably, each panel 14 is provided on the surface bottom with a layer 16 of insulating material. The fretted sheet-metal panels 14 bear a plurality of linear rows 18 of curved tiles 20 that extend along the line of maximum slope of the pitch 12. The linear rows 18 are spaced apart in a horizontal direction, and arranged between the adjacent rows 18 are strip-shaped solar modules 22. The solar modules 22 may be photovoltaic modules, thermal solar modules, or else photovoltaic and thermal modules. The solar modules 22 can be produced as described in the European patent application No. 09425048.7.

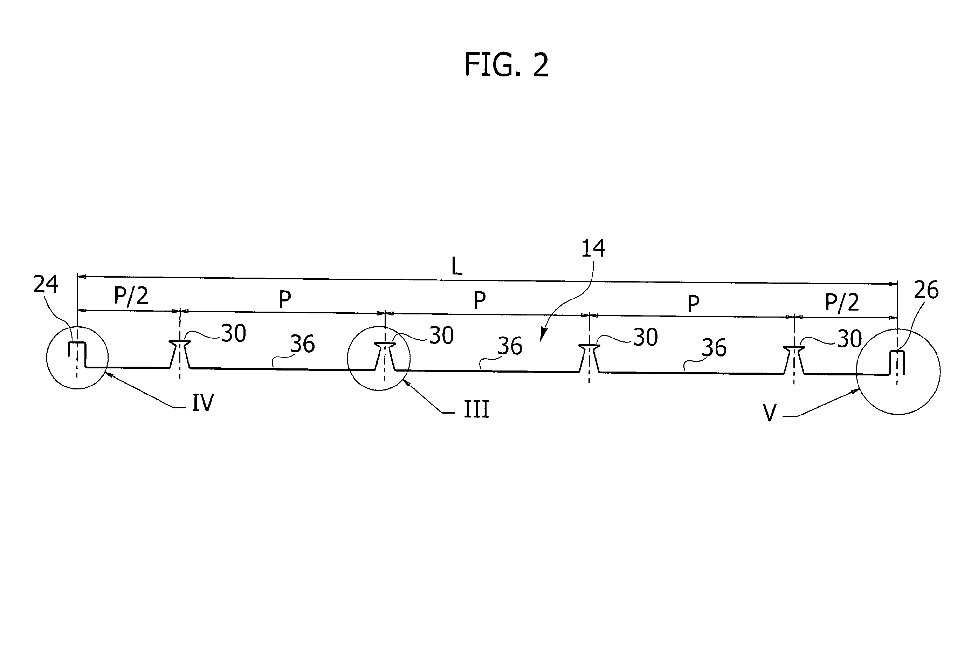

With reference to Figure 2, each fretted sheet-metal panel 14 has a first external longitudinal ribbing 24 and a second external longitudinal ribbing 26, and four internal longitudinal ribbings 30. The internal longitudinal ribbings 30 are all identical to one another and are spaced apart by a pitch P. The distance between the external longitudinal ribbings 24, 26 and the closest respective internal longitudinal ribbings 30 is equal to P/2. The overall width of the fretted sheet-metal panel 14 is designated by L and is equal to four times the pitch P.

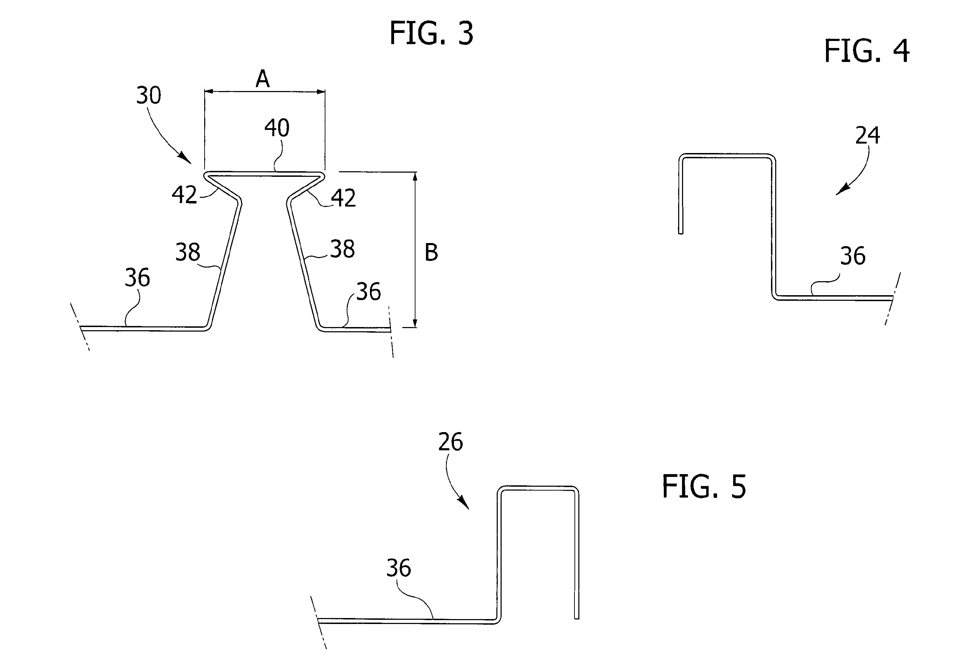

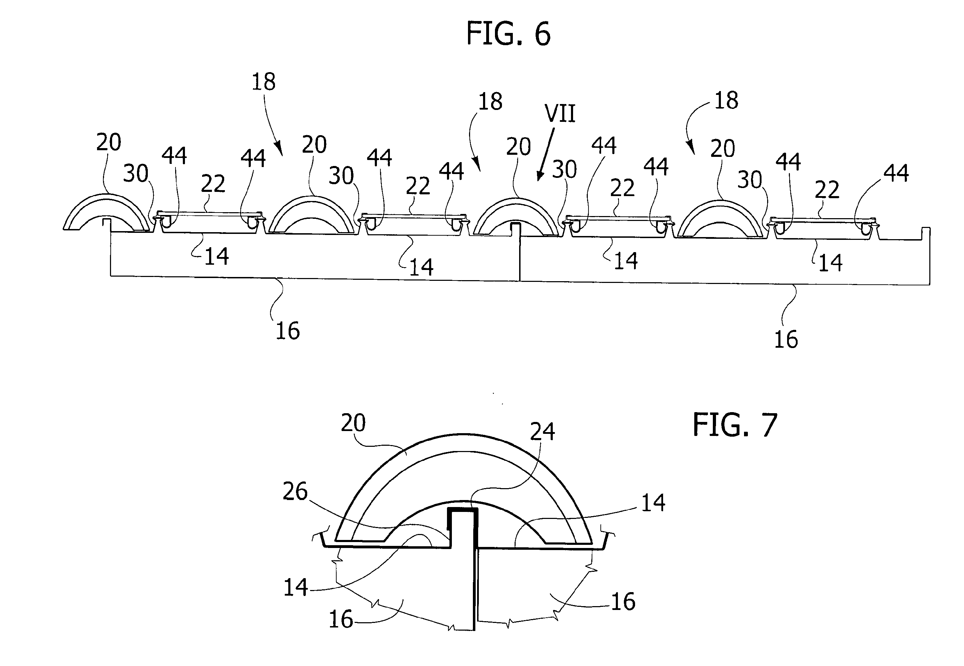

The first and second external longitudinal ribbings 24, 26 are both shaped like a U turned upside down. As illustrated in Figures 4 and 5, the second external longitudinal ribbing 26 has dimensions such as to be insertable within the first external longitudinal ribbing 24 so that the fretted sheet-metal panels 14 adjacent to one another can be engaged by inserting the second external longitudinal ribbing 26 of a first panel 14 into the first external longitudinal ribbing 24 of a second panel adjacent to the first, as illustrated in Figure 7.

With reference to Figures 2 and 3, the portions of panel that extend between the ribbings 24, 30, 26 are plane and form a base 36 of the panel 14. The portions of panel that form the base 36 could also present small corrugations or ribbings.

With reference to Figure 3, each internal longitudinal ribbing 30 has a dove-tail shape and has two inclined surfaces 38, which converge upwards starting from the base 36, a head surface 40 parallel to the base 36, and two undercut surfaces 42 that connect the lateral ends of the head surface 40 to the top ends of the inclined surfaces 38. The width A of the head surface 40 is of approximately 20 mm, and the distance B between the head surface 38 and the base 36 is approximately 25 mm.

The fretted sheet-metal panels 14 are produced by means of profiling technique conventional in the sector starting from sheets of metal, for example with a thickness of 0.7 mm, that can be obtained from reels with widths of less than 1295 mm.

The curved tiles 20 used for roofs have in cross section an arched shape with an extension of approximately 180° and are partially set on top of one another according to a technique conventional in the construction of curved-tile roofs. Existing curved tiles have a width ranging from 140 to 210 mm. For the construction of roofs according to the present invention, existing curved tiles have been divided into three groups according to their width:
group 1: width comprised between 140 and 160 mm;
group 2: width comprised between 160 and 180 mm;
group 3: width comprised between 180 and 210 mm.

The fretted sheet-metal panels 14 are made up of three models corresponding to the aforesaid groups of width of the curved tiles.

The panel models differ from one another in the size of the pitch P and, consequently, in the width L: group 1: P=190 mm; L=760 mm; strip of 1095 mm ±5% group 2: P=210 mm, L=840 mm; strip of 1175 mm ±5% group 3: P=240 mm, L=960 mm; strip of 1295 mm ±5%.

The dimensions of the internal longitudinal ribbings 30 remain constant for the different models.

The pitch P between the ribbings 30, the number of the ribbings 30 of each panel 14, and the dimensions of the ribbings 30 have been established in such a way that the width of the development of the panels 14 is always less than the maximum width of 1295 mm of the reels of sheet-metal from which the panels 14 are obtained.

With reference to Figure 6, for the construction of a roof according to the present invention the fretted sheet-metal panels 14, possibly provided with the respective layers of insulating material 16, are engaged to one another by inserting the second external longitudinal ribbing 26 of one panel 14 into the first external longitudinal ribbing 24 of an adjacent panel 14, as illustrated in Figures 6 and 7.

With reference to Figure 6, each solar module 22 is fixed by means of fasteners 44 between a pair of internal longitudinal ribbings 30 adjacent to one another. The solar panels 22 are spaced apart in a transverse direction by a width equal to the pitch P between the ribbings. Housed in the free space between two adjacent solar modules 22 is a row 18 of curved tiles 20. In this way, a roof is obtained, formed by an alternation of solar modules 22 and of linear rows 18 of curved tiles 20. It is also possible to arrange two or more rows 18 of curved tiles between each pair of adjacent solar panels 14 or else arrange a number of solar modules in contact with one another. The curved tiles 20 merely have an aesthetic function. The actual roofing function is performed by the fretted sheet-metal panels 14.

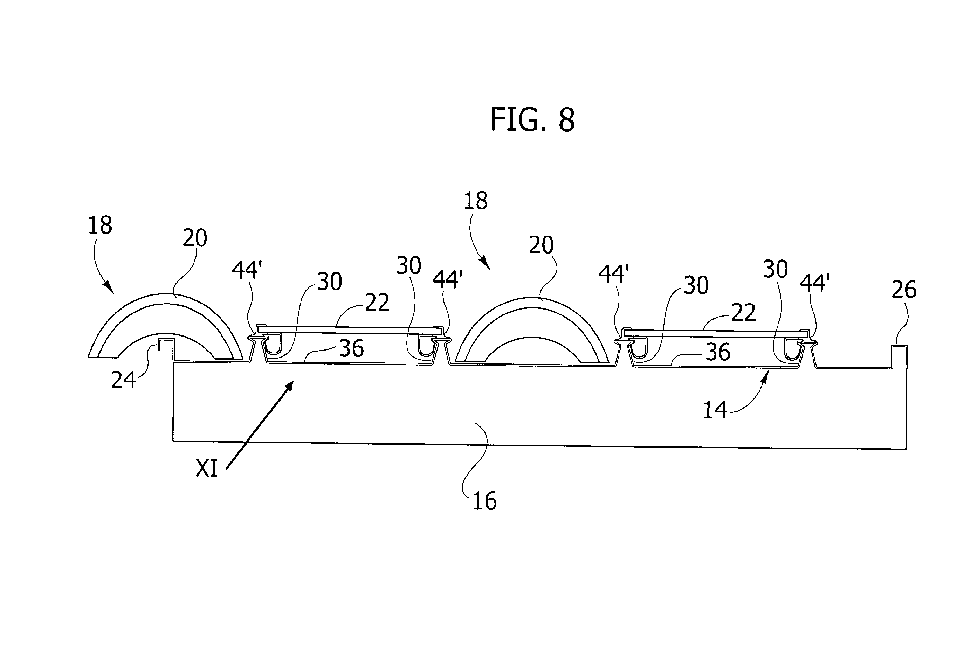

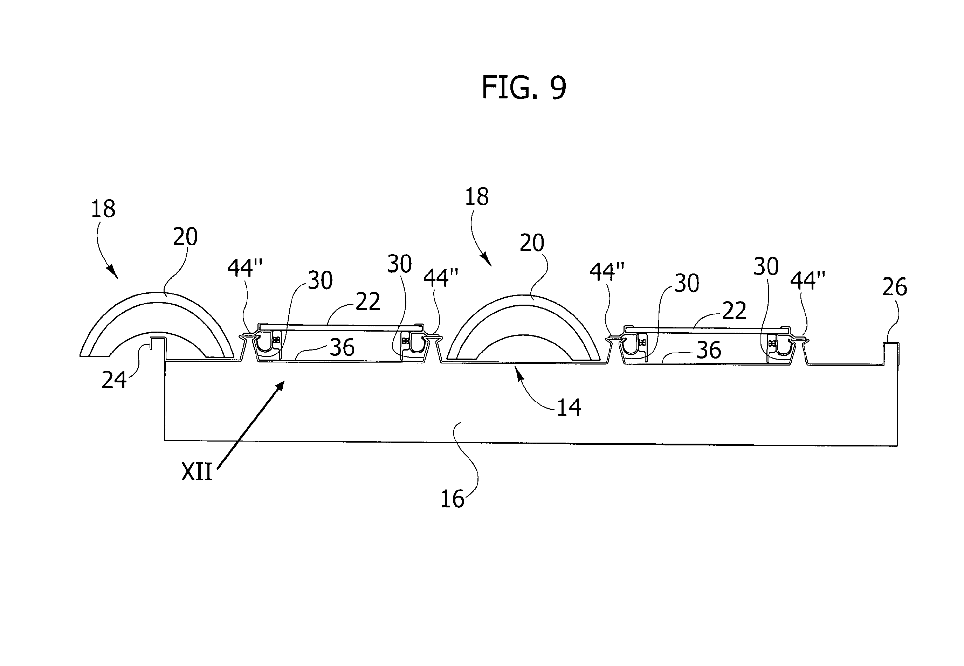

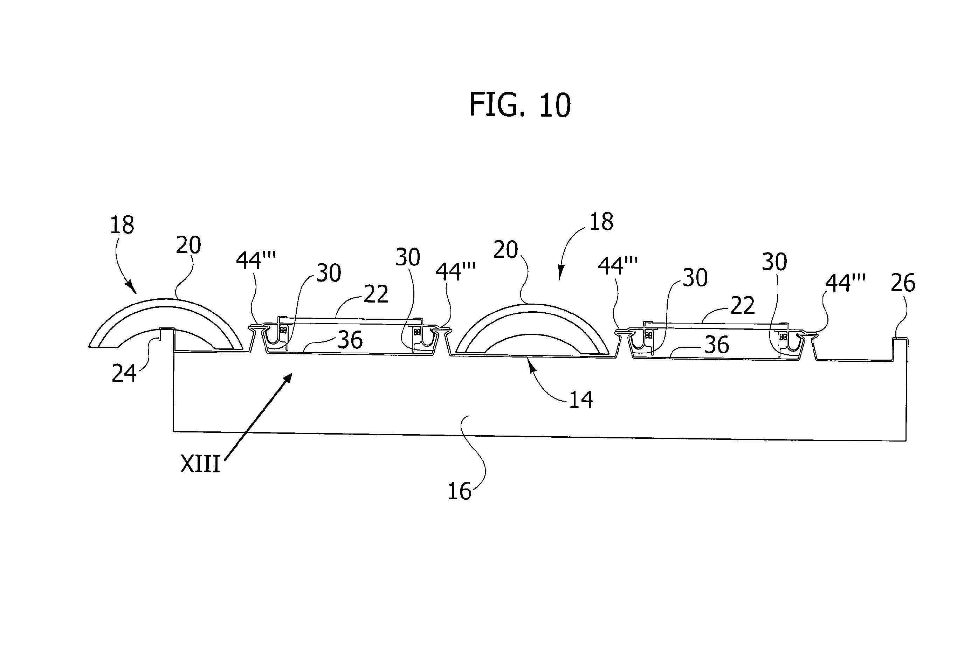

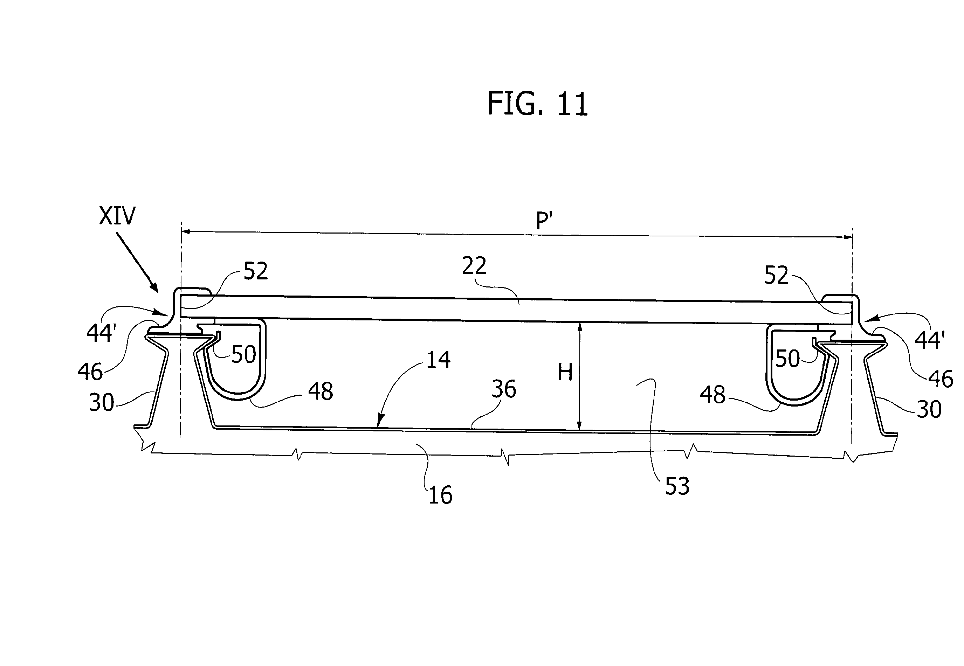

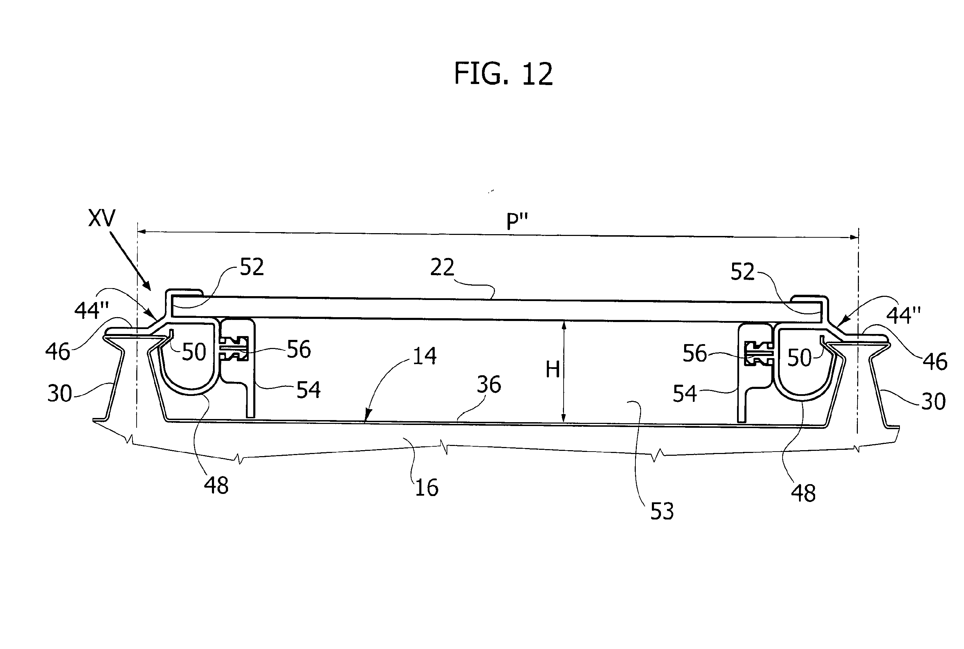

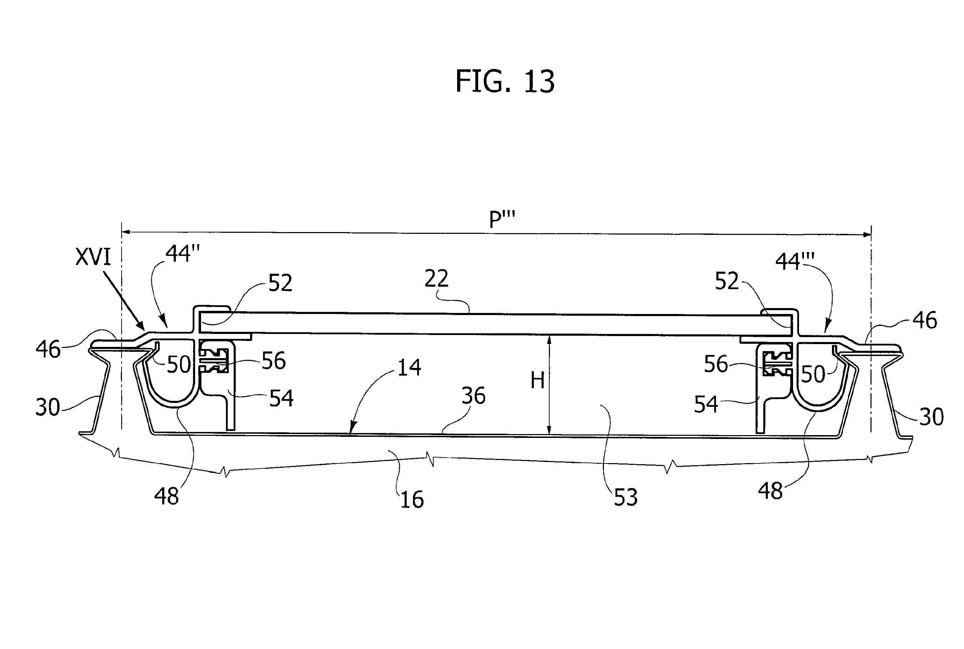

The solar modules 22 preferably have a constant width, for example of 190 mm, irrespective of the pitch P between the ribbings 30. To adapt the solar modules 22 to fretted sheet-metal panels 14 with different pitch P fasteners 44 of different shapes are used. Illustrated in Figures 8 and 11 is the installation of the solar modules 22 on panels 14 with a pitch P' of 190 mm, illustrated in Figures 9 and 12 is the installation of the solar panels 20 on panels 14 with a pitch P" of 210 mm, and illustrated in Figures 10 and 13 is the fixing of the solar modules 22 to panels 14 with a pitch P"' of 240 mm. In all cases, the solar modules 22 are fixed to a pair of adjacent ribbings 30 by means of fasteners 46' , 46" , 46"'.

Each fastener 46', 46", 46"' has a resting portion 46 that rests on the head surface 40 of a ribbing 30, an elastic portion 48 with an end 50 that presses against the undercut surface 42, and a C-shaped seat 52 in which a part of the side edge of a solar module 22 is inserted.

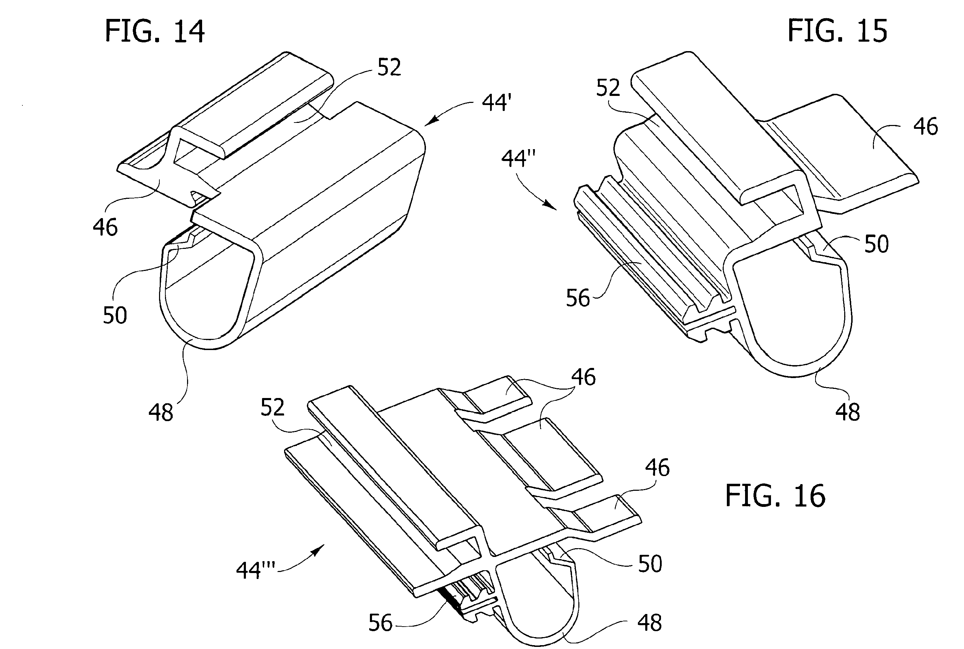

The fasteners 44', 44", 44" ' differ from one another as regards the distance between the C-shaped seat 52 and the resting portion 46. Figures 14, 15 and 16 are perspective views of the three types of fasteners 44', 44" , 44"'. The fasteners can be made of metal material and have an axial length in the region of a few centimetres. Each solar module 20 is fixed to a pair of adjacent ribbings, for example by means of three pairs of fasteners 44', 44" or 44"' . As may be seen in Figures 11, 12 and 13, defined between each solar module 20 and the base 36 of the fretted sheet-metal panel 14 is a gap 54 that enables a circulation of air for cooling the solar module 22. The height H of the gap 53 is substantially equal to 30 mm. This size of the gap 53 guarantees a natural circulation of a flow of air for cooling the solar module 22. The presence of the gap 53 is necessary in particular for solar modules 22 of a photovoltaic type given that the efficiency of the photovoltaic cells decreases as the temperature increases.

With reference to Figures 12 and 13, when the solar module 22 has a width smaller than the distance between the ribbings 30, it is preferable to provide resting profiles 54 between the solar module 22 and the base 36 of the fretted sheet-metal panel 14 to prevent the solar module 22 from being broken in the case where it is trodden on. The resting profiles 54 can be engaged to protuberances 56 of the fasteners 44" and 44''' and can extend in a longitudinal direction throughout the length of the solar module 22.

The height B of the ribbings 30 derives from a compromise between aesthetic requirements, the need to cool the solar modules 20, and limits linked to the recognition of the total architectural integration of the solar modules 22. The requirements linked to cooling impose the need to obtain a gap with a minimum thickness in the region of 30 mm to guarantee natural ventilation necessary for cooling the solar modules. The requirements of an aesthetic nature impose the need for the solar modules 22 not to project excessively into the pitch of the roof, whereas for recognition of the total architectural integration it is necessary for the solar panels 22 to be located at a height lower than the maximum height of the curved tiles or exceed the top surface of the curved tiles by less than its own thickness. The height B of the ribbings 30 of approximately 25 mm enables a compromise to be achieved between these requirements since it ensures a gap 53 of a height sufficient for natural ventilation, without, however, the solar module 22 projecting excessively from the aesthetic standpoint with respect to the rows of curved tiles. The solar panels 22 are moreover located underneath the surface of the curved tiles, as required by the standards for recognition of total architectural integration.

All the versions of the fretted sheet-metal panels 14 enable the installation of two strip-shaped solar modules with dimensions of 1655 x 190 mm, each of which is made up of 10 photovoltaic cells with dimensions of 156 x 156 mm connected in series to one another.

The fact of keeping the shape of the ribbings 30 unaltered for the three different sizes of the fretted sheet-metal panels 14 enables use of fasteners that are very similar to one another for the different versions. In fact, the profile of the elastic portion 48 of the fasteners 44', 44", and 44"' is substantially identical in the three versions.

The solution according to the present invention uses solar modules 22 of constant dimensions and enables use of curved tiles of any existing size choosing the fretted sheet-metal panels from three possible sizes and using the fasteners associated to the fretted sheet-metal panel of the size chosen. Engagement of the solar modules 22 to the fretted sheet-metal panels 14 is obtained in a simple and fast way and, in the basic version, without the use of screws or other fixing elements.

## Claims

1. A building roof having at least one inclined pitch (12) bearing a plurality of linear rows (18) of mutually parallel curved tiles (20), and a plurality of strip-shaped solar modules (22) arranged between said rows (18) of curved tiles (20), said roof being **characterized in that** it comprises a plurality of fretted sheet-metal panels (14), each of which has a plurality of longitudinal ribbings (30) configured for engagement of said solar modules (22), wherein each of said solar modules (22) is fixed by means of fasteners (44', 44" , 44"') between a pair of adjacent ribbings (30) and wherein said rows (18) of curved tiles (20) are arranged along the line of maximum slope of the pitch (12) between pairs of ribbings (30), to which said solar modules (22) are fixed.

2. The roof according to Claim 1, **characterized in that** each of said fretted sheet-metal panels (14) has a first external longitudinal ribbing (24) and a second external longitudinal ribbing (26) shaped so that the second external longitudinal ribbing (26) of each fretted sheet-metal panel (14) can be inserted into a first external longitudinal ribbing (24) of an adjacent fretted sheet-metal panel (14).

3. The roof according to Claim 1 or Claim 2, **characterized in that** each of said fretted sheet-metal panels (14) has four internal longitudinal ribbings (30) configured for fixing said solar modules (22) by means of fasteners (44', 44", 44"').

4. The roof according to Claim 3, **characterized in that** the pitch (P', P", P"') between said internal longitudinal ribbings (30) of each fretted sheet-metal panel (14) is constant and **in that** the distance between each of said external longitudinal ribbings (24, 26) and the adjacent internal longitudinal ribbing (30) is equal to half of said pitch (P', P" , P"').

5. The roof according to Claim 1, **characterized in that** each of said internal longitudinal ribbings (30) has in cross section the shape of an undercut with two inclined surfaces (38), which converge upwards from a base (36), a plane-head surface (40), and two undercut surfaces (42) that connect the lateral end of said head surface (40) to the top ends of said inclined surfaces (38).

6. The roof according to Claim 5, **characterized in that** each of said fasteners (44', 44" , 44"') comprises a resting portion (46) to enable resting on said head surface (40) of the respective internal longitudinal ribbing (30), an elastic portion (48) having an end (50) pressed against a respective undercut surface (42), and a C-shaped seat (52), into which a portion of a side edge of a solar module (22) is inserted.

7. A fretted sheet-metal panel (14) for a curved-tile roof according to one or more of the preceding claims, **characterized in that** it comprises a plurality of longitudinal ribbings (30) spaced apart by a constant pitch (P', P", P"') and shaped for engagement of solar modules between each pair of adjacent ribbings, where the pitch (P', P", P"') between said ribbings (30) is comprised between 190 and 240 mm.

## Amended claims

### Amended claims in accordance with Rule 137(2) EPC.

**1.** A building roof having at least one inclined pitch (12) having a line of maximum slope, comprising:
- a plurality of fretted sheet-metal panels (14), each of which has a plurality of longitudinal ribbings (30),
- a plurality of linear rows (18) of mutually parallel curved tiles (20), borne by said fretted sheet-metal panels (14), said linear rows (18) being spaced apart in a horizontal direction and extending along the line of maximum slope of the pitch (12), and
- a plurality of solar modules (22) fixed by means of fasteners (44', 44" , 44"') to said fretted sheet-metal panels (14),
the roof being **characterized in that**:
- said solar modules (22) are strip-shaped and are arranged between adjacent linear rows (18) of curved tiles (20),
- said longitudinal ribbings (30) are configured for engagement of said strip-shaped solar modules (22), and each of said strip-shaped solar modules (22) is fixed by means of said fasteners (44', 44" , 44"') between a pair of adjacent ribbings (30), and
- said rows (18) of curved tiles (20) are arranged between pairs of ribbings (30) to which said solar modules (22) are fixed.

**2.** The roof according to Claim 1, **characterized in that** each of said fretted sheet-metal panels (14) has a first external longitudinal ribbing (24) and a second external longitudinal ribbing (26) shaped so that the second external longitudinal ribbing (26) of each fretted sheet-metal panel (14) can be inserted into a first external longitudinal ribbing (24) of an adjacent fretted sheet-metal panel (14).

**3.** The roof according to Claim 1 or Claim 2, **characterized in that** each of said fretted sheet-metal panels (14) has four internal longitudinal ribbings (30) configured for fixing said solar modules (22) by means of fasteners (44', 44" , 44"').

**4.** The roof according to Claim 3, **characterized in that** the pitch (P', P" , P"') between said internal longitudinal ribbings (30) of each fretted sheet-metal panel (14) is constant and **in that** the distance between each of said external longitudinal ribbings (24, 26) and the adjacent internal longitudinal ribbing (30) is equal to half of said pitch (P', P" , P"').

**5.** The roof according to Claim 1, **characterized in that** each of said internal longitudinal ribbings (30) has in cross section the shape of an undercut with two inclined surfaces (38), which converge upwards from a base (36), a plane-head surface (40), and two undercut surfaces (42) that connect the lateral end of said head surface (40) to the top ends of said inclined surfaces (38).

**6.** The roof according to Claim 5, **characterized in that** each of said fasteners (44', 44", 44"') comprises a resting portion (46) to enable resting on said head surface (40) of the respective internal longitudinal ribbing (30), an elastic portion (48) having an end (50) pressed against a respective undercut surface (42), and a C-shaped seat (52), into which a portion of a side edge of a solar module (22) is inserted.

**7.** A fretted sheet-metal panel (14) for a curved-tile roof according to one or more of the preceding claims, **characterized in that** it comprises a plurality of longitudinal ribbings (30) spaced apart by a constant pitch (P', P", P"') and shaped for engagement of solar modules between each pair of adjacent ribbings, where the pitch (P' , P" , P"' ) between said ribbings (30) is comprised between 190 and 240 mm.
